# EUROPÄISCHE PATENTSCHRIFT

(11) **EP 0 651 484 B1**
(45) Veröffentlichungstag und Bekanntmachung des Hinweises auf die Patenterteilung: **02.09.1998**
(21) Anmeldenummer: 94115815.6
(22) Anmeldetag: 07.10.1994
(51) Int. Cl.: H02B 13/035

(54) **Hochspannungsschaltgerät**
High-tension switchgear
Appareil de coupure à haute tension

(30) Priorität: 29.10.1993 DE 4336951
(43) Veröffentlichungstag der Anmeldung: 03.05.1995
(73) Patentinhaber: ASEA BROWN BOVERI AG, 5400 Baden (CH)
(72) Erfinder: Tecchio, Piero, CH-5452 Oberrohrdorf (CH)

(56) Entgegenhaltungen:
- CH-A- 622 375
- DE-A- 3 413 962

## Beschreibung

### TECHNISCHES GEBIET

Die Erfindung geht aus von einem Hochspannungsschaltgerät für eine gasisolierte Schaltanlage gemäss dem Oberbegriff des Anspruchs 1.

### STAND DER TECHNIK

Es sind Hochspannungsschaltgeräte für gasisolierte Schaltanlagen bekannt, beispielsweise aus der Patentschrift DE 25 38 130, die zwei Schaltstellen aufweisen, die entlang einer gemeinsamen Längsachse erstreckt sind. Die beiden Schaltstellen werden von einem gemeinsamen Antrieb betätigt, der zentral in der Mitte zwischen den beiden Schaltstellen angreift. Wird das Hochspannungsschaltgerät waagrecht aufgestellt, so benötigt es eine vergleichsweise grosse Grundfläche für die beiden längserstreckten Schaltstellen. Wird das Hochspannungsschaltgerät mit senkrechter Längsachse aufgestellt, so benötigt es nach oben vergleichsweise viel Raum, der anderweitig nicht genutzt werden kann.

Aus der Offenlegungsschrift DE 34 13 962 A1 ist ein Leistungsschalter bekannt, der für eine Freiluftanwendung ausgelegt ist. Er weist zwei in Reihe geschaltete Löschkammern auf, die waagrecht entlang einer gemeinsamen Achse angeordnet sind. Die Löschkammern sind durch ein zentral angeordnetes Zwischengehäuse aus Metall miteinander verbunden. Dieses Zwischengehäuse liegt auf Hochspannungspotential. Ein auf Erdpotential liegender Schalterantrieb betätigt mittels einer elektrisch isolierend ausgebildeten Zugstange über eine im Zwischengehäuse angeordnete Umlenkung gleichzeitig die beweglichen Kontakte beider Löschkammern. Dieser Leistungsschalter weist einen vergleichsweise grossen Platzbedarf in Richtung der gemeinsamen Achse der Löschkammern auf.

Aus der Patentschrift CH 622 375 ist ein Freiluftschalter mit zwei Y-förmig angeordneten Löschkammern bekannt, der in axialer Richtung etwas weniger Platz benötigt, der dafür jedoch nach oben mehr Raum beansprucht.

### DARSTELLUNG DER ERFINDUNG

Hier setzt die Erfindung ein. Die Erfindung, wie sie in dem unabhängigen Anspruch gekennzeichnet ist, löst die Aufgabe, ein Hochspannungsschaltgerät für eine gasisolierte Schaltanlage zu schaffen, welches sowohl bei waagrechter als auch bei senkrechter Aufstellung weniger Raum beansprucht.

Die durch die Erfindung erreichten Vorteile sind im wesentlichen darin zu sehen, dass die abgewinkelt angeordneten Schaltstellen neue, Raum und Platz sparende Anordnungskonzepte für gasisolierte Schaltanlagen erlauben.

Eine bevorzugte Ausführungsform des Hochspannungsschaltgeräts für eine gasisolierte Schaltanlage weist ein gasgefülltes Metallgehäuse und eine in diesem gehaltenen Strombahn auf, die selbst mindestens zwei in in Reihe geschaltete Schaltstellen aufweist. Die beweglichen Kontaktstücke der Schaltstellen werden von einem gemeinsamen, an dem Metallgehäuse befestigten Antrieb betätigt. Die Strombahn bildet einen Winkel, wobei auf jedem Schenkel des Winkels jeweils mindestens eine der mindestens zwei Schaltstellen angeordnet ist, und wobei der Winkel als rechter Winkel ausgebildet ist.

Das Metallgehäuse des Hochspannungsschaltgeräts weist einen Mittelabschnitt auf, an den zwei rohrförmige Gehäuseabschnitte angesetzt sind, von welchen jeweils einer mindestens eine der Schaltstellen umschliesst, wobei die Längsachsen der rohrförmigen Gehäuseabschnitte parallel zur Achse des jeweiligen Schenkels verlaufen. Der Scheitel des Winkels liegt dabei stets innerhalb des Mittelabschnitts.

Der Mittelabschnitt weist mindestens eine erste Öffnung auf, die für den Anbau des die beweglichen Kontaktstücke betätigenden Antriebs vorgesehen ist. Der Mittelabschnitt weist auch eine zweite Öffnung auf, die für den Anbau eines Widerstandsgehäuses vorgesehen ist, welches einen beim Einschalten mit den Schaltstellen in Wirkverbindung stehenden Einschaltwiderstand und für dessen Zu- und Abschaltung nötige Hilfsschaltstellen umschliesst.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine stark vereinfachte erste Ausführungsform eines Hochspannungsschaltgeräts, und
Fig.2 eine stark vereinfachte zweite Ausführungsform eines Hochspannungsschaltgeräts.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

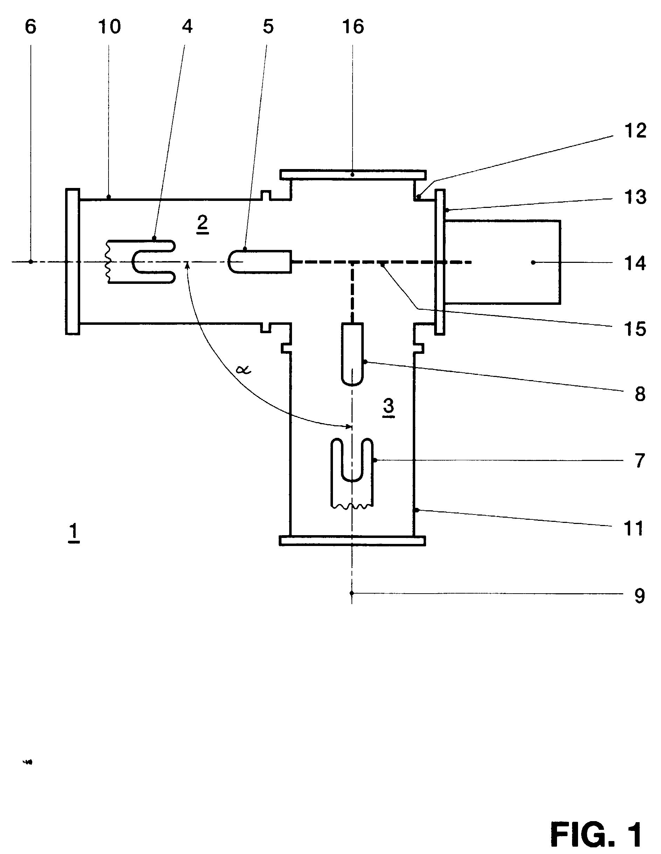

Die Fig.1 zeigt eine vereinfachte erste Ausführungsform eines Hochspannungsschaltgeräts für eine gasisolierte Schaltanlage. Bei diesem Hochspannungsschaltgerät kann es sich beispielsweise um einen Leistungsschalter oder um einen Trenner handeln. Das Hochspannungsschaltgerät 1 weist zwei in Reihe geschaltete Schaltstellen 2,3 auf. Die Schaltstelle 2 weist ein feststehendes Kontaktstück 4 und ein bewegliches Kontaktstück 5 auf, welches sich in Richtung einer ersten Längsachse 6 bewegt. Die Schaltstelle 3 weist ein feststehendes Kontaktstück 7 und ein bewegliches Kontaktstück 8 auf, welches sich in Richtung einer zweiten Längsachse 9 bewegt. Die Schaltstellen 2,3 sind in rohrförmig ausgebildeten Gehäusen 10,11 angeordnet. Auf die Darstellung der Stützisolatoren, der Nennstrombahn, welche die beiden beweglichen Kontaktstücke 5 und 8 miteinander verbindet und weiterer konstruktiver für die beschriebene Erfindung jedoch nicht wesentlichen Elemente wurde verzichtet. Die beiden rohrförmigen Gehäuse 10 und 11 sind mit einem Eckgehäuse 12 druckdicht verbunden. Das Eckgehäuse 12 kann auch an eines der Gehäuse 10 oder 11 angegossen sein. An die beiden rohrförmigen Gehäuse 10 und 11 sind an der dem Eckgehäuse 12 abgewandten Seite jeweils weitere Komponenten der gasisolierten Schaltanlage druckdicht angeschlossen, die jedoch hier nicht dargestellt sind. Die beiden Längsachsen 6 und 9 schneiden sich unter einem Winkel α, der 90° beträgt.

Das Eckgehäuse 12 ist mit einer ersten Öffnung 13 versehen, die mit einem Flansch verschlossen ist, an den ein Antrieb 14 angeflanscht ist. Der Antrieb 14 wirkt, wie eine sich verzweigende, gestrichelte Wirkungslinie 15 andeutet, auf die beiden beweglichen Kontaktstücke 5 und 8 ein und bewegt sie in Aus- oder Einschaltrichtung. Das Eckgehäuse 12 ist mit einer zweiten Öffnung 16 versehen, die mit einem Flansch druckdicht verschlossen ist.

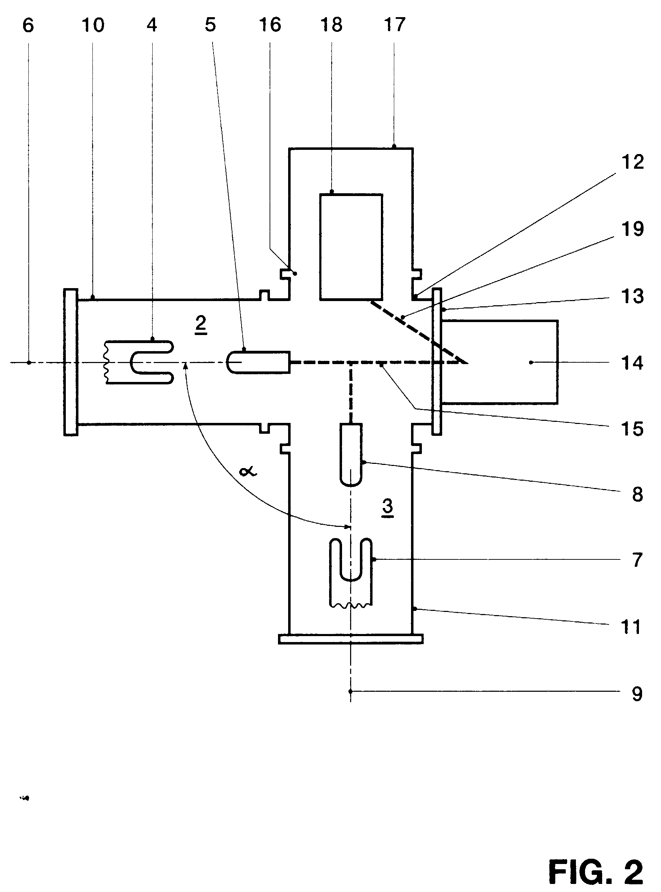

Die Fig.2 zeigt eine vereinfachte zweite Ausführungsform eines Hochspannungsschaltgeräts für eine gasisolierte Schaltanlage. Bei dieser Ausführungsform kann es sich beispielsweise um einen Leistungsschalter handeln, der mit Einschaltwiderständen ausgerüstet ist. Bei diesem Hochspannungsschaltgerät ist an die Öffnung 16 ein druckdichtes Widerstandsgehäuse 17 angeflanscht. Dieses Widerstandsgehäuse 17 umschliesst einen Einschaltwiderstand 18 und hier nicht dargestellte Hilfsschaltstellen, die für dessen Zu- und Abschaltung nötig sind. Die Betätigung der Hilfsschaltstellen erfolgt, wie durch eine Wirkungslinie 19 angedeutet, vom Antrieb 14 her. Der Einschaltwiderstand 18 überbrückt vor dem Einschalten eine durch Auftrennung der nicht dargestellten Nennstrombahn entstandene Trennstelle und wird dann nach dem erfolgten Einschalten durch das Schliessen dieser Trennstelle kurzgeschlossen. Eine weitere Hilfsschaltstelle trennt danach den Einschaltwiderstand 18 ab.

Der abgewinkelte Aufbau des Hochspannungsschaltgeräts ermöglicht kompaktere Anlagekonfigurationen bei gasisolierten Schaltanlagen. Derartige Anlagekonfigurationen erlauben die Erstellung kleinerer Gebäude für die Unterbringung der gasisolierten Schaltanlage, was deren Wirtschaftlichkeit vorteilhaft erhöht. Der Einbau des Einschaltwiderstands 18 so, dass er beim Einschalten kurzzeitig in Reihe mit den zugeordneten Schaltstellen 2,3 liegt, bringt den Vorteil mit sich, dass er nicht mehr parallel zu jeder der Schaltstellen 2,3 angeordnet werden muss, sodass der Durchmesser der Gehäuse 10,11 im Vergleich zu herkömmlichen gasisolierten Schaltanlagen kleiner ausgeführt werden kann, was ebenfalls wirtschaftliche Vorteile mit sich bringt. Wird der Durchmesser der Gehäuse 10,11 jedoch nicht reduziert, so können sie infolge des Weglassens der Einbauten für den Einschaltwiderstand für höhere Betriebsspannungen verwendet werden.

### BEZEICHNUNGSLISTE

- 1: Hochspannungsschaltgerät
- 2,3: Schaltstellen
- 4: feststehendes Kontaktstück
- 5: bewegliches Kontaktstück
- 6: Längsachse
- 7: feststehendes Kontaktstück
- 8: bewegliches Kontaktstück
- 9: Längsachse
- 10,11: Gehäuse
- 12: Eckgehäuse
- 13: Öffnung
- 14: Antrieb
- 15: Wirkungslinie
- 16: Öffnung
- 17: Widerstandsgehäuse
- 18: Einschaltwiderstand
- 19: Wirkungslinie
- α: Winkel

## Patentansprüche

1. Hochspannungsschaltgerät für eine metallgekapselte gasisolierte Schaltanlage mit einem gasgefüllten, einen Mittelabschnitt aufweisenden Metallgehäuse und mit einer in diesem gehaltenen Strombahn, die mindestens zwei in Reihe geschaltete Schaltstellen (2,3) aufweist, deren bewegliche Kontaktstücke (5,8) von einem gemeinsamen, an einer ersten Öffnung (13) des Mittelabschnitts des Metallgehäuses befestigten Antrieb (14) betätigt werden, wobei die Strombahn einen Winkel (α) bildet, und wobei auf jedem Schenkel des Winkels (α) jeweils mindestens eine der mindestens zwei Schaltstellen (2,3) angeordnet ist, deren jede von einem rohrförmigen, an den Mittelabschnitt angesetzten Gehäuseabschnitt umschlossen ist, und wobei der Mittelabschnitt eine zweite Öffnung (16) aufweist, die für den Anbau eines Widerstandsgehäuses (17) vorgesehen ist, welches einen beim Einschalten mit den Schaltstellen (2,3) in Wirkverbindung stehenden Einschaltwiderstand (18) und für dessen Zu- und Abschaltung nötige Hilfsschaltstellen umschliesst, dadurch gekennzeichnet,
- dass der Winkel (α) als rechter Winkel ausgebildet ist.

2. Hochspannungsschaltgerät nach Anspruch 1, dadurch gekennzeichnet,
- dass die Längsachsen (6,9) der rohrförmigen Gehäuseabschnitte parallel zur Achse des jeweiligen Schenkels verlaufen.

3. Hochspannungsschaltgerät nach einem der Ansprüche 1 oder 2, dadurch gekennzeichnet,
- dass der Scheitel des Winkels (α) innerhalb des Mittelabschnitts liegt.

4. Hochspannungsschaltgerät nach einem der Ansprüche 1 bis 3, dadurch gekennzeichnet,
- dass der Mittelabschnitt als Eckgehäuse (12) mit Anschlussflanschen ausgebildet ist, mit denen die rohrförmigen Gehäuseabschnitte druckdicht verbunden werden.

## Claims

1. High-voltage switching device for metal-encapsulated gas-insulated switchgear, having a gas-filled metal housing which has a middle section, and having a conducting path which is held in said metal housing and has at least two series-connected switching points (2,3) whose movable contact pieces (5, 8) are actuated by a common drive (14) mounted at a first opening (13) of the middle section of the metal housing, the conducting path forming an angle (α), and there being respectively arranged on each leg of the angle (α) at least one of the at least two switching points (2, 3), each of which is surrounded by a tubular housing section attached to the middle section, and the middle section having a second opening (16), which is provided for attaching a resistance housing (17) which surrounds a closing resistor (18), which is operationally connected to the switching points (2, 3) during closure, and auxiliary switching points required for connecting and disconnecting said closing resistor, characterized
- in that the angle (α) is constructed as a right angle.

2. High-voltage switching device according to Claim 1, characterized
- in that the longitudinal axes (6, 9) of the tubular housing sections extend parallel to the axis of the respective leg.

3. High-voltage switching device according to one of Claims 1 or 2, characterized
- in that the vertex of the angle (a) is situated inside the middle section.

4. High-voltage switching device according to one of Claims 1 to 3, characterized
- in that the middle section is constructed as a corner housing (12) having connecting flanges by means of which the tubular housing sections are connected in a pressure-tight fashion.

## Revendications

1. Appareil de coupure à haute tension pour un équipement de commutation isolé par gaz muni d'un boîtier métallique rempli de gaz présentant une section centrale et d'une voie de courant logée dans celui-ci, laquelle présente au moins deux points de commutation (2, 3) branchés en série, dont les contacts mobiles (5, 8) sont actionnés par un mécanisme (14) fixé sur une première ouverture (13) de la section centrale du boîtier métallique, la voie de courant formant un angle (α), et au moins un des au moins deux points de commutation (2, 3) étant disposé sur chaque branche de l'angle (α), chacun d'entre eux étant entouré par une section de boîtier tubulaire montée sur la section centrale, et la section centrale présentant une deuxième ouverture (16) qui est prévue pour le montage d'un boîtier de résistance (17), lequel renferme une résistance de mise sous tension (18) se trouvant en liaison active avec les points de commutation (2, 3) lors de la mise sous tension ainsi que les points de commutation auxiliaires nécessaires pour sa mise hors tension, caractérisé par le fait que l'angle (α) est réalisé sous la forme d'un angle droit.

2. Appareil de coupure à haute tension selon la revendication 1, caractérisé par le fait que les axes longitudinaux (6, 9) des sections de boîtier tubulaire sont parallèles à l'axe de la branche correspondante.

3. Appareil de coupure à haute tension selon l'une des revendications 1 ou 2, caractérisé par le fait que le sommet de l'angle (α) se trouve à l'intérieur de la section centrale.

4. Appareil de coupure à haute tension selon l'une des revendications 1 à 3, caractérisé par le fait que la section centrale est réalisée sous la forme d'un boîtier coudé (12) muni de brides de raccordement à l'aide desquelles sont reliées les sections de boîtier tubulaires de manière à tenir la pression.
